# DEMANDE DE BREVET EUROPEEN

(11) **EP 1 995 909 A1**
(43) Date de publication de la demande: **26.11.2008**
(21) Numéro de dépôt: 08156417.1
(22) Date de dépôt: 19.05.2008
(51) Int. Cl.: H04L 12/18

(54) **Procédé d'évaluation dynamique de l'humeur d'un utilisateur de messagerie instantanée**

(30) Priorité: 25.05.2007 FR 0755254
(71) Demandeur: France Télécom, 75015 Paris (FR)
(72) Inventeur: Dos Santos, Martinho, 35235, THORIGNE-FOUILLARD (FR); Gestraud, Yann, 35700, RENNES (FR); Texier, Hervé, 35230, NOYAL CHATILLON SUR SEICHE (FR)
(74) Mandataire: Desormiere, Pierre-Louis

(57) **Abrégé**

L'invention concerne un procédé d'évaluation dynamique de l'humeur d'un utilisateur (1) d'une messagerie électronique qui envoi avec son terminal (3) un message électronique à destination d'un autre utilisateur (2), l'utilisateur (1) ayant un élément représentatif de son humeur visible le destinataire du message (2) et, d'une manière générale, par tous les contacts de l'utilisateur (1).

Le message envoyé transite par une plateforme (10) qui comprend un module d'évaluation de l'humeur des utilisateurs (13) qui modifie un paramètre de mesure de l'humeur de l'utilisateur (1) émetteur du message en fonction d'au moins un critère prédéterminé présent dans le message envoyé. Le paramètre modifié est notifié au destinataire du message et à tout ou partie des contacts de l'utilisateur (1).

## Description

### Domaine de l'invention

La présente invention concerne le domaine des services d'échange de messages électroniques tels que les messageries instantanées ou les services de "chat" (services de discussion en temps réel). Elle concerne plus particulièrement l'enrichissement de l'information de présence dans de tels systèmes.

### Art antérieur

Les systèmes de conversation électronique en temps réel, tels que la messagerie instantanée, permettent à des utilisateurs d'échanger des messages en temps réel. Un système de messagerie instantanée standard comprend une plateforme ou serveur de messagerie instantanée auquel sont connectés des utilisateurs par leur client respectif de messagerie instantanée. La plateforme comprend un module principal de messagerie instantanée pour l'échange de messages entre clients de messagerie instantanée en fonction de règles de routage des messages instantanés. Ce module gère également les états de présence de l'ensemble des contacts (également appelés "buddy lists") inscrits auprès du service de messagerie instantanée.

L'état de présence/disponibilité d'un utilisateur est un paramètre visible pour les autres usagers. Cet état peut varier en général entre un état "présent" et "absent" ou un état "disponible" et "occupé". Ces états de présence définissent pour l'ensemble de la liste de contacts de l'utilisateur la capacité à dialoguer de ce dernier.

Dans certains systèmes de messagerie instantanée, les utilisateurs disposent en outre d'une option leur permettant notamment d'indiquer leur humeur actuelle. Cette dernière peut être représentée par un avatar expressif ou par un texte significatif de leur état d'esprit.

Cependant, la gestion d'un tel paramètre incombe à l'utilisateur qui est obligé de configurer manuellement ce paramètre pour le rendre pertinent. La gestion manuelle par l'utilisateur de son information d'humeur, en particulier au cours d'une conversation instantanée avec d'autres utilisateurs, devient rapidement fastidieuse. En effet, au cours d'un échange de messages instantanés, l'humeur de l'utilisateur peut changer plusieurs fois en fonction de la conversation. L'utilisateur ne peut assurer en même temps une conversation en temps réel et une gestion permanente de son humeur. Par conséquent, dans la plupart des cas, l'utilisateur ne gère pas l'information relative à son humeur si bien que celle-ci présente rarement un caractère pertinent.

### Objet et description succincte de l'invention

La présente invention a pour objet de pallier ces inconvénients en proposant une solution qui permet d'évaluer en pseudo temps réel et de façon automatique l'humeur d'un utilisateur dans un système de messagerie instantanée.

A cet effet, la présente invention propose un procédé d'évaluation dynamique de l'humeur d'un utilisateur d'une messagerie électronique comprenant au moins une étape d'envoi d'un message électronique depuis un utilisateur à destination d'au moins un destinataire, l'utilisateur ayant un élément représentatif de son humeur visible par au moins un destinataire du message, procédé dans lequel, un paramètre de mesure de l'humeur de l'utilisateur émetteur du message est modifié en fonction d'au moins un critère prédéterminé présent dans le message envoyé par l'utilisateur, le paramètre ainsi modifié étant notifié audit au moins un destinataire du message.

Ainsi, le procédé de la présente invention utilise avantageusement des éléments présents dans les messages instantanés envoyés par un utilisateur pour évaluer son humeur. De cette façon, l'utilisateur n'a plus besoin d'intervenir pour mettre à jour son humeur visible par les autres utilisateurs, cette dernière étant automatiquement mise à jour en fonction de critères prédéterminés présents dans les messages.

Les messages instantanés sont le plus souvent enrichis par des éléments directement représentatifs de l'humeur de son rédacteur comme par exemple des émitocônes (type "smiley"), des marques de ponctuation telles que des points d'exclamation, des majuscules, des tailles ou couleur de caractères spécifiques, etc. Avec le procédé de l'invention, tout ou partie de ces éléments peut être utilisé comme critère de modification du paramètre de mesure de l'humeur, ce qui permet d'informer en quasi temps réel les contacts de l'utilisateur sur son humeur en leur notifiant le paramètre de mesure de l'humeur dès qu'il est modifié. On assure ainsi une information réaliste et pertinente sur l'humeur d'un utilisateur.

Par ailleurs, à l'exception des mots clés, les critères présents dans les messages instantanés qui sont utilisés pour modifier le paramètre de mesure de l'humeur, comme par exemple les émoticônes ou la ponctuation, sont indépendants de la langue utilisée et se retrouvent dans un très grand nombre de pays. Le procédé de l'invention peut donc être mis en oeuvre simplement sans nécessiter l'utilisation d'un dictionnaire sémantique.

En plus du ou des destinataires du message, le paramètre de mesure de l'humeur peut bien entendu être notifié à tout ou partie des contacts enregistrés dans la liste des contacts de l'utilisateur du service de messagerie instantanée.

Selon un aspect de l'invention, le paramètre de mesure de l'humeur est en outre modifié en fonction d'une pluralité de règles d'évaluation de l'humeur exécutées dans un ordre déterminé, chaque règle d'évaluation modifiant, par exemple en séquence, le paramètre de mesure de l'humeur dudit utilisateur après vérification d'au moins un critère associé à chaque règle. Selon une variante, lorsque plusieurs critères sont associés à une règle, les actions définies dans cette règle pour modifier le paramètre de mesure de l'humeur ne sont exécutées que si tous les critères associés sont vérifiés.

De cette manière, il est possible d'établir un ordre de priorité dans l'application des critères utilisés pour la modification du paramètre de mesure de l'humeur. Ainsi, la modification apportée au paramètre de mesure de l'humeur par l'exécution d'une règle s'ajoute à celles déjà apportées par la ou les règles précédemment exécutées. Cela permet notamment d'exécuter une règle d'évaluation permettant d'accentuer ou d'atténuer l'intensité d'une humeur après une règle d'évaluation permettant définir la nature de l'humeur.

Selon un autre aspect de l'invention, le paramètre de mesure de l'humeur est en outre modifié après une durée prédéterminée sans envoi de message par l'utilisateur ou après une durée prédéterminée d'envoi par l'utilisateur de messages sans critère prédéterminé.

Le procédé de l'invention peut ainsi prendre en compte également le temps comme critère de modification du paramètre de mesure de l'humeur notamment pour permettre un retour à une humeur neutre en cas d'inactivité de l'utilisateur ou en cas d'échange de messages non significatifs vis-à-vis de l'humeur, c'est-à-dire des messages sans critères prédéterminés (émoticônes, ponctuation, etc.).

La modification du paramètre de mesure de l'humeur peut être réalisée en déplaçant un curseur sur un disque divisé en secteurs, chaque secteur correspondant à une nature d'humeur et la distance entre le centre du disque et le curseur correspondant à l'intensité de l'humeur. L'utilisation d'un tel disque permet de disposer d'un moyen de qualification et de quantification de l'humeur d'un utilisateur qui est directement interprétable par les utilisateurs et qui peut, par conséquent, être aussi utilisé comme élément représentatif de l'humeur visible par les utilisateurs sur leur terminal.

Selon une variante, l'élément représentatif de l'humeur est visible par l'émetteur du message et ledit paramètre modifié est notifié à l'émetteur du message. De cette façon, l'émetteur du message a connaissance de l'humeur qui lui est associée et qui est affichée sur les terminaux destinataires.

Le procédé de l'invention peut être mis en oeuvre par un programme d'ordinateur exécuté sur des moyens de traitement (processeur) d'une plateforme ou d'un serveur de messagerie, le programme comprenant des instructions pour exécuter les étapes du procédé décrit ci-dessus.

Le programme décrit précédemment peut être stocké sur un support de données sous forme d'une série d'instructions de code de programme pour l'exécution du procédé décrit précédemment lorsque ledit programme est exécuté sur un ordinateur et plus particulièrement sur des moyens de traitement (processeur) d'une plateforme ou d'un serveur de messagerie.

L'invention concerne en outre une plateforme de messagerie instantanée comprenant des moyens pour acheminer au moins un message électronique envoyé par un utilisateur à destination d'au moins un destinataire, la plateforme comprenant en outre des moyens pour modifier un paramètre de mesure de l'humeur de l'utilisateur émetteur du message en fonction d'au moins un critère prédéterminé présent dans le message envoyé par ledit utilisateur et pour notifier ledit paramètre audit au moins un destinataire du message.

Comme expliqué précédemment pour le procédé de l'invention, la plateforme selon la présente invention permet d'évaluer automatiquement l'humeur d'un utilisateur en utilisant avantageusement des éléments présents dans les messages instantanés envoyés par l'utilisateur, ce qui permet d'actualiser l'information d'humeur de l'utilisateur quasiment en temps réelle. Avec la plateforme de l'invention, la fonctionnalité permettant d'informer les contacts d'un utilisateur dans un service de messagerie instantanée devient réellement attractive grâce à sa simplicité de mise en oeuvre.

La plateforme peut comprendre en outre des moyens pour modifier le paramètre de mesure de l'humeur après une durée prédéterminée sans envoi de message par l'utilisateur ou après une durée prédéterminée d'envoi par l'utilisateur de messages sans critère prédéterminé, ce qui permet notamment de ne pas laisser apparaître une information d'humeur obsolète.

L'invention a également pour objet un programme d'ordinateur de client de messagerie électronique destiné à être exécuté sur un terminal informatique d'un utilisateur, ledit programme comprenant des instructions pour permettre la composition, l'envoi et la réception de messages électroniques, le programme comprenant en outre des instructions pour afficher un élément représentatif de l'humeur d'au moins un contact de la liste de contacts de l'utilisateur et des instructions pour modifier ledit élément représentatif de l'humeur en fonction d'au moins un paramètre de mesure de l'humeur reçu par le terminal.

Ainsi, grâce au programme d'ordinateur de client de messagerie électronique de l'invention, chaque utilisateur dispose sur son terminal d'un élément pour visualiser l'humeur d'un ou plusieurs de ses contacts, l'élément représentatif de l'humeur étant automatiquement modifié par la réception d'un paramètre de mesure de l'humeur transmis avec l'information d'état de présence enrichie.

Selon un aspect du programme d'ordinateur de client de messagerie électronique de l'invention, ce programme comprend en outre des instructions pour afficher un élément représentatif de l'humeur de l'utilisateur du terminal sur lequel ledit programme est exécuté et en ce qu'il comprend des instructions pour modifier ledit élément représentatif de l'humeur dudit l'utilisateur en fonction d'au moins un paramètre de mesure de l'humeur reçu par le terminal ou en réponse à une commande de mise à jour exécutée localement sur le terminal. L'utilisateur peut ainsi visualiser l'évolution de sa propre humeur et intervenir manuellement sur cette dernière le cas échéant.

L'invention concerne enfin un terminal informatique (par exemple un ordinateur) comprenant des moyens pour permettre la composition, l'envoi et la réception de messages électroniques, caractérisé en ce qu'il comprend en outre des moyens pour afficher un élément représentatif de l'humeur d'au moins un contact de la liste de contacts de l'utilisateur et des instructions pour modifier ledit élément représentatif de l'humeur en fonction d'au moins un paramètre de mesure de l'humeur reçu par le terminal.

Selon un aspect de l'invention, le terminal comprend en outre des moyens pour afficher un élément représentatif de l'humeur de l'utilisateur dudit terminal et des moyens pour modifier ledit élément représentatif de l'humeur dudit utilisateur en fonction d'au moins un paramètre de mesure de l'humeur reçu par le terminal ou en réponse à une commande de mise à jour exécutée localement sur le terminal.

Selon une variante, le terminal comprend des moyens pour afficher un élément représentatif de l'humeur de l'utilisateur dudit terminal.

### Brève description des dessins

D'autres caractéristiques et avantages de l'invention ressortiront de la description suivante de modes particuliers de réalisation de l'invention, donnés à titre d'exemples non limitatifs, en référence aux dessins annexés, sur lesquels:
- la figure 1 est une vue schématique globale d'un mode de réalisation d'un système de messagerie instantanée selon l'invention,
- la figure 2 montre un disque de mesure de l'humeur conformément à un mode de réalisation de l'invention,
- la figure 3 est un ordinogramme illustrant les étapes mises en oeuvre dans le procédé d'évaluation dynamique de l'humeur d'un utilisateur conformément à un mode de réalisation de l'invention.

### Description détaillée des modes de réalisation de l'invention

La présente invention s'applique en particulier mais non exclusivement aux systèmes de conversation électronique instantanée tels que les systèmes de messagerie instantanée ou services de "chat". L'invention propose d'intégrer des fonctionnalités essentiellement sous forme logicielle dans les plateformes ou serveurs de messagerie habituellement utilisés pour réaliser des échanges de messages instantanés entre des utilisateurs. Les fonctionnalités proposées sont compatibles avec les normes et protocoles actuellement utilisés par les services de conversation instantanée, ce qui permet d'intégrer ces nouvelles fonctionnalités aussi bien dans des nouveaux systèmes que dans des systèmes de conversation instantanée déjà en place.

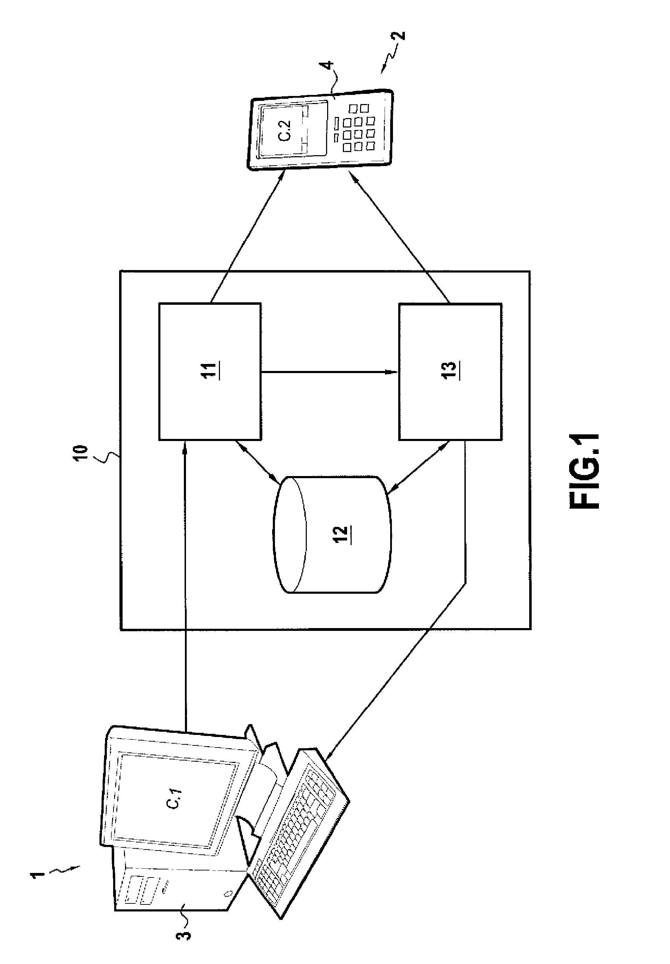

La figure 1 est un schéma fonctionnel général d'un système selon l'invention montrant les différentes parties intervenant dans le procédé de l'invention. Le système de l'invention décrit ici est mis en oeuvre dans un système de messagerie instantanée. Les parties qui interviennent principalement lors d'une opération d'évaluation dynamique de l'humeur d'un utilisateur sont au moins deux utilisateurs 1 et 2 possédant chacun respectivement un terminal 3, 4 équipé d'un client de messagerie instantané C_1, C_2. Les terminaux 3 et 4 sont chacun en liaison avec une plateforme de messagerie instantanée 10 qui permet l'échange de messages instantanés entre ces deux terminaux.

Dans l'exemple considéré dans la figure 1, les utilisateurs 1 et 2 disposent respectivement, en tant que terminal d'envoi et de réception des messages, d'un terminal fixe 3, du type ordinateur personnel connecté à un réseau informatique et d'un terminal mobile 4 du type assistant numérique personnel communicant (PDA) ou téléphone mobile. Cependant, la présente invention s'applique d'une manière générale à tous les terminaux qui comprennent des moyens d'envoi et de réception de messages instantanés via un réseau de communication.

De façon connue, le client de messagerie instantanée (ou agent utilisateur) est un logiciel qui permet à un utilisateur d'accéder, par un identifiant propre, à un service de messagerie instantanée via la plateforme de messagerie instantanée 10. Le client de messagerie instantanée permet notamment de composer et de recevoir des messages. Il permet aussi à l'utilisateur d'accéder à la plateforme de messagerie instantanée pour gérer son état de présence vis-à-vis sa liste de contacts associée. Conformément à la présente invention, le client de messagerie instantanée comprend en outre des moyens pour afficher un élément représentatif (texte, valeur numérique, "émoticône" ou "smiley", couleur, etc.) de l'humeur des utilisateurs appartenant à la liste de contacts de l'utilisateur du client de messagerie. Le client de messagerie selon l'invention comprend encore des moyens pour permettre l'affichage de l'élément représentatif de la propre humeur de l'utilisateur du client de messagerie et des moyens pour lui permettre de modifier manuellement cet élément.

Le réseau de communication (non représenté) à travers lequel les terminaux des utilisateurs sont connectés à la plateforme de messagerie instantanée peut être un réseau "ouvert" comme le réseau Internet, un réseau "fermé" tel qu'un réseau d'entreprise de type Intranet, ou encore un réseau partiellement ouvert utilisant à la fois un réseau fermé et un réseau ouvert.

La plateforme 10 peut être mise en oeuvre au sein d'un serveur de messagerie instantanée. La plateforme 10 comprend un module principal de messagerie instantanée 11, qui est un élément logiciel bien connu en soi, et qui est destiné à réaliser le routage des messages instantanés entre les utilisateurs de la messagerie en fonction de règles de routage de messages instantanés (agent de transfert). Le module 11 réalise en outre la gestion de présence des utilisateurs de la messagerie instantanée en tenant à jour l'état de présence de chaque utilisateur dans une base de données 12.

Conformément à l'invention, la plateforme 10 comprend en outre un module d'évaluation de l'humeur des utilisateurs 13 qui, comme expliqué plus loin en détail, permet d'évaluer de façon dynamique l'humeur d'un utilisateur de la messagerie instantanée et de notifier cette humeur aux autres utilisateurs. Selon une variante, l'humeur de l'émetteur d'un message est aussi visible par l'émetteur. Le module d'évaluation de l'humeur des utilisateurs 13 est un élément logiciel qui comprend une série de règles d'évaluation exécutées dans un ordre déterminé afin d'évaluer automatiquement l'humeur d'un utilisateur de la messagerie. L'humeur de l'émetteur est évaluée des messages envoyés par ce dernier qui sont des messages de type "texte". On entend ici par message de type texte tout message comprenant aussi bien des lettres, des caractères, des signes graphiques, des émoticônes, etc. Le module 13 comprend en outre un analyseur syntaxique (en anglais "parser") qui, de façon connue, est un programme informatique qui permet d'extraire des messages les éléments clés utilisés par les règles d'évaluation de l'humeur. A titre d'exemple, l'analyseur syntaxique est utilisé pour isoler dans un message instantané les émoticônes (en anglais "smiley"), les points d'exclamation, les mots en majuscules qui sont considérés comme des éléments du message significatifs de l'humeur de son auteur (critères prédéterminés des règles d'évaluation de l'humeur).

Pour permettre l'évaluation, c'est-à-dire la mesure, de l'humeur d'un utilisateur, celle-ci doit pouvoir être quantifiée à l'aide d'un paramètre qualificatif et quantitatif de l'humeur, appelé par la suite "paramètre de mesure de l'humeur", qui est modifié en fonction d'un ou plusieurs altères prédéterminés correspondant à au moins un élément extrait du message de type texte.

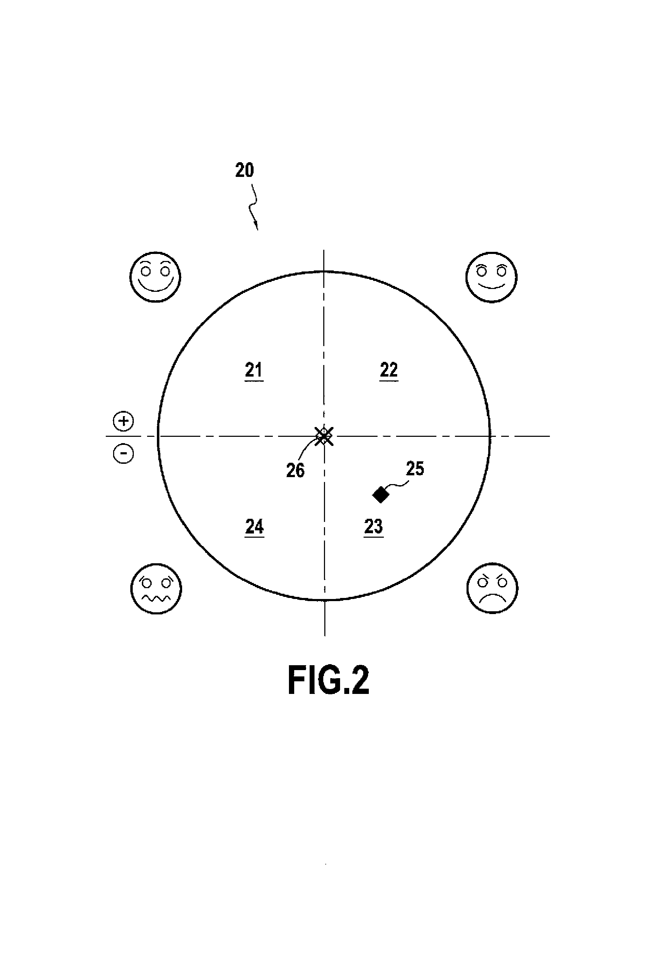

A cet effet, l'invention propose notamment de définir l'humeur d'un utilisateur en fonction de la position d'un curseur sur un disque, cette position correspondant à la valeur du paramètre de mesure de l'humeur. La figure 2 montre un exemple d'un disque 20 divisé en quatre secteurs ou pôles d'humeurs 21 à 24, représentant ici respectivement la joie, le rire, la colère et la tristesse et sur lesquels se déplace un curseur 25. Le centre 26 du disque 20 représente un état neutre de l'humeur de l'utilisateur vers lequel se déplace peu à peu le curseur 25 en cas d'inactivité de l'utilisateur, Le degré minimal d'évaluation consiste à déterminer si l'humeur de l'utilisateur est plutôt positive ou négative (correspondant à une bonne ou mauvaise humeur dans le sens commun) selon que le curseur 25 est dans la moitié supérieure ou inférieure du disque 20. La position du curseur 25 dans un des pôles 21 à 24 précise la nature de l'humeur de l'utilisateur tandis que la distance du curseur par rapport au centre est proportionnelle avec l'intensité de cette humeur. Dans l'exemple représenté sur la figure 2, le curseur 25 est dans la moitié négative du disque 20, à l'intérieur du pôle 23 et à une distance relativement proche du centre 26. Cela signifie que l'utilisateur est de mauvaise humeur et légèrement en colère.

Le disque décrit précédemment ne représente qu'un outil de paramétrage parmi d'autres possibles pour mesurer l'humeur d'un utilisateur. En effet, le paramètre de mesure de l'humeur peut tout aussi bien correspondre simplement à un nombre dont le signe indique la nature de l'humeur (négatif=mauvaise humeur, 0=neutre, positif=bonne humeur) et dont la valeur indique l'intensité l'humeur (faible à fort). De même, l'humeur peut être évaluée en fonction d'une couleur (rouge=mauvaise humeur, blanc=neutre, vert=bonne humeur) et de son intensité (couleur claire=intensité humeur faible, couleur foncée=intensité humeur forte).

Le module d'évaluation de l'humeur des utilisateurs 13 contient un ensemble de règles d'évaluation de l'humeur préalablement définies, par exemple par le fournisseur du service de messagerie instantanée, qui vont permettrent par leur exécution séquentielle d'évaluer l'humeur d'un utilisateur. Les règles d'évaluation sont constituées de critères et d'actions correspondantes. Dans notre exemple de réalisation, si tous les critères associés à la règle sont respectés, l'action correspondante est réalisée.

L'ordre de déclaration des règles définit leur priorité et leur ordre d'exécution. La règle n déclarée avant la règle n+1, s'exécute avant et le ou les critères de la règle n+1 tiennent compte des actions accomplies de la règle n. De même si son ou ses critères sont valides, les actions de la règle n+1 viendront s'ajouter à celles éventuellement déjà appliquées avant elles.

Les règles d'évaluation préalablement définies vont permettre de modifier le paramètre de mesure de l'humeur. Dans le cas du disque tel que décrit précédemment, l'exécution de ces règles permet le déplacement du curseur sur le disque, la position du curseur sur le disque étant directement représentative de l'humeur de l'utilisateur considéré. A titre d'exemple, chaque règle contient des instructions pour modifier les coordonnées polaires (r, θ) du curseur sur le disque en cas de vérification du ou des critères associés à la règle, ce qui permet ainsi de déplacer le curseur vers le pôle d'humeur correspondant (valeur angle θ) et avec l'intensité correspondante (valeur distance r).

Dans le cas d'un paramètre de mesure de l'humeur correspondant, par exemple, à une simple valeur numérique dont le signe indique la nature de l'humeur (négatif=mauvaise humeur, 0=neutre, positif=bonne humeur) et dont la valeur indique l'intensité l'humeur (faible à fort), chaque règle d'évaluation comprend des instructions pour, lorsque le ou les critères associés à la règle sont vérifiés, modifier la valeur numérique d'origine ou déjà modifiée par une règle exécutée précédemment.

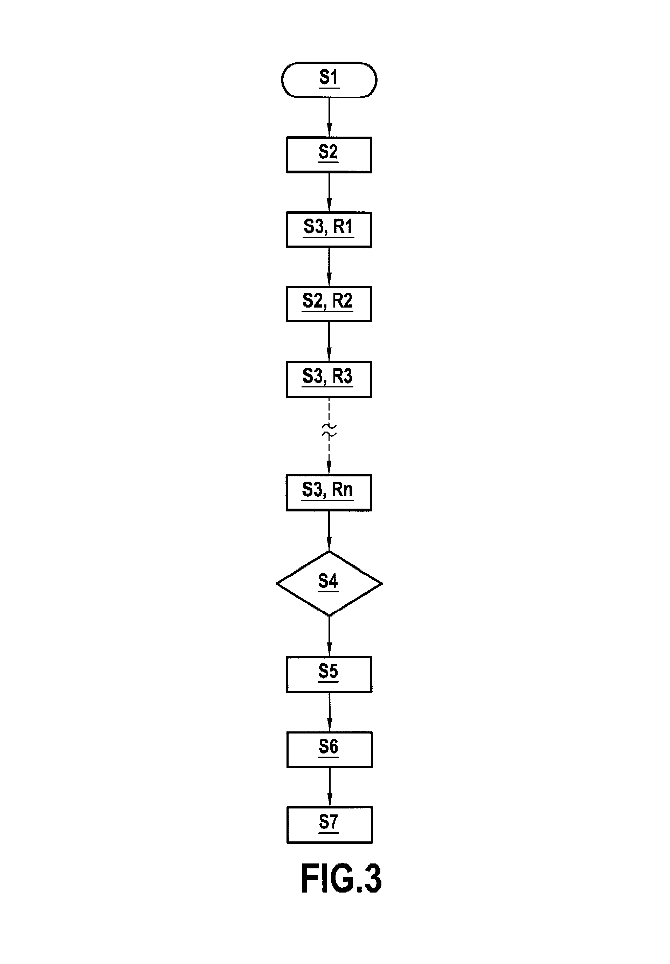

On décrit maintenant en relation avec la figure 3 un mode de mise en oeuvre du procédé selon l'invention dans le système de la figure 1 dans le cas où l'utilisateur 1 envoie un message à l'utilisateur 2. Dans le mode de mise en oeuvre décrit ici, l'humeur est représentée au moyen du disque 20 décrit précédemment.

Dans une première étape S1, l'utilisateur 1 compose et envoie, via son client de messagerie C_1 de son terminal 3, un message instantané à destination de l'utilisateur 2. Le message envoyé transite par la plateforme 10 qui analyse le contenu de celui-ci pour déterminer les éléments clés éventuellement présents (étape S2). Plus précisément, le module principal de messagerie instantanée 11 duplique le message envoyé par l'utilisateur 1 et le transmet à la fois au terminal 4 de l'utilisateur 2 et au module d'évaluation de l'humeur des utilisateurs 13. Le module 13 utilise son analyseur syntaxique pour extraire du message des éléments prédéterminés correspondant à des critères associés aux règles d'évaluation de l'humeur comme par exemple, des émoticônes, des mots clés définis préalablement, des points d'exclamation, des mots en majuscules.

Une fois les éléments prédéterminés extraits du message, on applique la série de règles d'évaluation de l'humeur préalablement programmées dans le module 13. Comme expliqué précédemment, les règles d'évaluation sont exécutées dans un ordre déterminé. Le module 13 exécute la première règle d'évaluation de la série de règle (étape S3.R1). La règle dévaluation suivante est exécutée (étape S3.R2) en tenant compte éventuellement de la modification apportée au paramètre de mesure de l'humeur par la règle exécutée précédemment si le ou les critères associés à cette dernière ont été vérifiés.

Le tableau ci-après montre un exemple d'une série de règles d'évaluation de l'humeur qui sont exécutées dans l'ordre indiqué par leur numéro, le paramètre de mesure de l'humeur étant matérialisé sur le disque 20 décrit précédemment.

| **Règles d'évaluation** | **Critère(s)** | **Action résultante** |
|---|---|---|
| Règle n°1 | le message contient une émoticône (par exemple 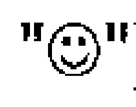 ) | Le curseur se positionne dans le pôle d'humeur 21 à 24 du disque 20 correspondant à la signification de l'émoticône (par exemple si le message contient l'émoticône 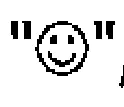 ,le curseur 25 se positionne dans le pôle 21 ("joie") à une distance du centre 26 définie par le poids attribué à l'émoticône 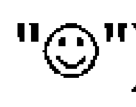 ) |
| Règle n°2 | le message contient certains mots clés définis par le fournisseur du service | Les mots clés sont traités comme les émoticônes en considérant leur signification. (Le fournisseur du service aura préalablement définit un certain nombre de mots clés associés à chaque émoticônes) |
| Règle n°3 | le message contient un ou plusieurs points d'exclamation | Le curseur conserve son axe dans le pôle d'humeur mais s'éloigne du centre 26 d'une distance égale à la moitié de cette qui le sépare du bord du disque et ce autant de fois qu'il y a de points d'exclamation. |
| Règle n°4 | le message contient des mots en majuscules | Le curseur s'éloigne un peu du centre 26. |
| Règle n°5 | Inactivité de l'utilisateur pendant une certaine durée (définie par le fournisseur) | Le curseur se rapproche du centre 26 en divisant par deux la distance qui le sépare de celui-ci. |
| Règle n°6 | Absence d'éléments clés dans les messages émis depuis un certain temps (défini par le fournisseur) | Le curseur s'approche du neutre de la moitié de la distance qui le sépare de celui-ci. |

Lorsque que toutes les règles d'évaluation de l'humeur définies dans le module 13 ont été exécutées (étape S3.R1 à S3.Rn), le module 13 vérifie si l'humeur résultante est différente de celle connue avant l'exécution des règles en comparant le paramètre de mesure de l'humeur résultant avec celui avant l'exécution des règles. Dans l'exemple décrit ici, le module 13 compare la position du curseur 25 sur le disque 20 après l'exécution des règles avec sa position mémorisée avant l'exécution des règles (étape S4). S'il n'y a pas de différence entre la position du curseur 25 avant et après l'exécution des règles aucune action n'est entreprise.

Si le paramètre de mesure de l'humeur est différent après l'exécution des règles, le module 13 actualise l'état de présence de l'utilisateur en l'enrichissant de sa nouvelle humeur ainsi calculée. Plus précisément, le paramètre de mesure de l'humeur de l'utilisateur 1 résultant de l'exécution des règles d'évaluation peut être inséré avec les données d'état de présence de l'utilisateur présentes dans la base de données 12 (étape S5). De cette manière, le paramètre de mesure de l'humeur actualisé peut être diffusé aux contacts de l'utilisateur ainsi qu'à lui-même avec l'état de présence (étape S6). Cela permet d'utiliser les mécanismes de diffusion d'état de présence existants dans la messagerie pour la transmission de l'humeur de l'utilisateur.

Les clients de messagerie des utilisateurs recevant l'état de présence avec le paramètre représentatif de l'humeur de l'utilisateur 1, ici les clients C_1 de l'utilisateur 1 (émetteur du message) et C_2 de l'utilisateur 2 (destinataire du message), modifieront automatiquement leur élément représentatif de l'humeur de l'utilisateur 1 en fonction de la valeur du paramètre de mesure de l'humeur reçu avec l'état de présence (étape S7). Ainsi, l'utilisateur 2 a connaissance de l'humeur de l'utilisateur 1 au moment de l'envoi de son message, l'utilisateur 1 pouvant également visualiser sur son propre terminal l'état de son humeur vue par l'utilisateur 2. L'élément représentatif de l'humeur affiché sur le terminal de chaque utilisateur peut être un disque similaire au disque 20 dont le curseur est positionné en fonction de la valeur (coordonnées polaires) paramètre de mesure de l'humeur transmis. L'élément représentatif de l'humeur peut également avoir la forme d'un avatar ou d'une image. Dans ce cas, le paramètre de mesure de l'humeur reçu est interprété par le client de messagerie du terminal pour modifier l'avatar en conséquence, par exemple soit en utilisant une bibliothèque d'images ou de photos de l'utilisateur, soit par l'intermédiaire d'une animation graphique (2D ou 3D).

Le message instantané envoyé par l'utilisateur 1 (étape S1) est transmis à l'utilisateur 2 par le module principal de messagerie 11 en parallèle des étapes d'évaluation de l'humeur (étapes S2 à S7) décrites précédemment. En d'autres termes, l'analyse des messages par le module d'évaluation de l'humeur des utilisateurs 13, ne retarde pas leur transmission entre les utilisateurs si bien que le service de messagerie instantanée fonctionne normalement sans gêne pour les utilisateurs.

Par souci de simplification, le système de la figure 1 est représenté avec deux clients de messagerie instantanée. Toutefois, au vu de la description qui suit, l'homme du métier envisagera sans difficulté la mise en oeuvre d'un tel système à plus grande échelle, c'est-à-dire avec un nombre d'utilisateurs plus important.

## Revendications

1. Procédé d'évaluation dynamique de l'humeur d'un utilisateur (1) d'une messagerie électronique comprenant au moins une étape d'envoi d'un message électronique par l'utilisateur à destination d'au moins un destinataire (2), l'utilisateur ayant un élément représentatif de son humeur visible par au moins un destinataire du message,
**caractérisé en ce qu'**un paramètre de mesure de l'humeur de l'utilisateur émetteur du message est modifié en fonction d'au moins un critère prédéterminé présent dans le message envoyé par ledit utilisateur et **en ce que** ledit paramètre modifié est notifié audit au moins un destinataire du message.

2. Procédé selon la revendication 1, **caractérisé en ce que** le paramètre de mesure de l'humeur est en outre modifié en fonction d'une pluralité de règles d'évaluation de l'humeur exécutées dans un ordre déterminé, chaque règle d'évaluation modifiant le paramètre de mesure de l'humeur dudit utilisateur après vérification d'au moins un critère associé à chaque règle.

3. Procédé selon la revendication 1 ou 2, **caractérisé en ce que** le paramètre de mesure de l'humeur est en outre modifié après une durée prédéterminée sans envoi de message par l'utilisateur ou après une durée prédéterminée d'envoi par l'utilisateur de messages sans critère prédéterminé.

4. Procédé selon l'une quelconque des revendications 1 à 3, **caractérisé en ce que** la modification du paramètre de mesure de l'humeur est réalisée en déplaçant un curseur (25) sur un disque (20) divisé en secteurs (21-24), chaque secteur correspondant à une nature d'humeur et la distance entre le centre (26) du disque (20) et le curseur (25) correspondant à l'intensité de l'humeur.

5. Procédé selon la revendication 1, **caractérisé en ce que** l'élément représentatif de l'humeur est visible par l'émetteur du message et **en ce que** ledit paramètre modifié est notifié à l'émetteur du message.

6. Plateforme de messagerie instantanée (10) comprenant des moyens pour acheminer au moins un message électronique envoyé par un utilisateur (1) à destination d'au moins un destinataire (2),
**caractérisée en ce qu'**elle comprend en outre des moyens (13) pour modifier un paramètre de mesure de l'humeur de l'utilisateur émetteur du message en fonction d'au moins un critère prédéterminé présent dans le message envoyé par ledit utilisateur (1) et pour notifier ledit paramètre audit au moins un destinataire du message (2).

7. Plateforme selon la revendication 6, **caractérisée en ce qu'**elle comprend en outre des moyens pour modifier le paramètre de mesure de l'humeur après une durée prédéterminée sans envoi de message par l'utilisateur ou après une durée prédéterminée d'envoi par l'utilisateur de messages sans critère prédéterminé.

8. Programme d'ordinateur incluant au moins une série d'instructions de code de programme pour l'exécution d'un procédé conforme à l'une des revendications 1 à 5 lorsque ledit programme est exécuté sur un ordinateur.

9. Support de données sur lequel a été mémorisée au moins une série d'instructions de code de programme pour l'exécution d'un procédé conforme à l'une des revendications 1 à 5 lorsque ledit programme est exécuté sur un ordinateur.

10. Programme d'ordinateur de client de messagerie électronique (C_1) destiné à être exécuté sur un terminal informatique (3) d'un utilisateur (1), ledit programme comprenant des instructions pour permettre la composition, l'envoi et la réception de messages électroniques, **caractérisé en ce qu'**il comprend en outre des instructions pour afficher un élément représentatif de l'humeur d'au moins un contact de la liste de contacts de l'utilisateur et des instructions pour modifier ledit élément représentatif de l'humeur en fonction d'au moins un paramètre de mesure de l'humeur reçu par le terminal.

11. Programme d'ordinateur selon la revendication 9, **caractérisé en ce qu'**il comprend en outre des instructions pour afficher un élément représentatif de l'humeur de l'utilisateur du terminal sur lequel ledit programme est exécuté et **en ce qu'**il comprend des instructions pour modifier ledit élément représentatif de l'humeur dudit utilisateur en fonction d'au moins un paramètre de mesure de l'humeur reçu par le terminal ou en réponse à une commande de mise à jour exécutée localement sur le terminal.

12. Terminal informatique (3) comprenant des moyens pour permettre la composition, l'envoi et la réception de messages électroniques, **caractérisé en ce qu'**il comprend en outre des moyens pour afficher un élément représentatif de l'humeur d'au moins un contact de la liste de contacts de l'utilisateur dudit terminal et des instructions pour modifier ledit élément représentatif de l'humeur en fonction d'au moins un paramètre de mesure de l'humeur reçu par le terminal.

13. Terminal selon la revendication 12, **caractérisé en ce qu'**il comprend en outre des moyens pour afficher un élément représentatif de l'humeur de l'utilisateur dudit terminal et des moyens pour modifier ledit élément représentatif de l'humeur dudit utilisateur en fonction d'au moins un paramètre de mesure de l'humeur reçu par le terminal ou en réponse à une commande de mise à jour exécutée localement sur le terminal.

14. Terminal selon la revendication 12, **caractérisé en ce qu'**il comprend des moyens pour afficher un élément représentatif de l'humeur de l'utilisateur dudit terminal.
